Europäisches Patentamt

European Patent Office

Office européen des brevets

(11) Publication number: **0 176 859**
A2

## (12) EUROPEAN PATENT APPLICATION

(21) Application number: **85111735.8**

(22) Date of filing: **17.09.85**

(51) Int. Cl.⁴: **G 06 F 1/00**
**H 05 K 7/14**

(30) Priority: **01.10.84 US 656635**

(43) Date of publication of application:
**09.04.86 Bulletin 86/15**

(84) Designated Contracting States:
**DE FR GB NL**

(71) Applicant: **TEKTRONIX, INC.**
**Tektronix Industrial Park D/S Y3-121 4900 S.W. Griffith
Drive P.O. Box 500**
**Beaverton Oregon 97077(US)**

(72) Inventor: **Chewning, Patrick W.**
**795 N.W. Forest**
**Hillsboro Oregon 97124(US)**

(72) Inventor: **Lancaster, Michael T.**
**13035 S.W. 121st Street**
**Tigard Oregon 97223(US)**

(74) Representative: **Strasse, Joachim, Dipl.-Ing. et al,
Strasse und Stoffregen European Patent Attorneys
Zweibrückenstrasse 17
D-8000 München 2(DE)**

(54) System for assembling an electronic work station.

(57) A system for assembling electronic work stations including multiple electronic units. The electronic units are provided as subassemblies, premounted into specially formed trays. Special slide engaging male and female mounting components have one of the components formed into the chassis and the other component formed into the tray. The subassemblies are simply slid into place and various locking means are automatically engaged as the subassemblies are forced into their "home" position. The assembly time is greatly reduced resulting in substantial savings.

EP 0 176 859 A2

Croydon Printing Company Ltd.

# SYSTEM FOR ASSEMBLING AN ELECTRONIC WORK STATION

## Field of the Invention

This invention relates to an electronic work station comprised of the assembly of multiple subassemblies, and more particularly to an assembly design and system that provides improved efficiency in the assembling of the subassemblies that make up the work station.

## Background of the Invention

Electronic equipment in particular has been advanced in recent years to such a degree that equipment that used to fill an entire room and cost millions of dollars can now be assembled into a work station that will easily fit on a normal desk top, at a cost that can be measured in the several thousands of dollars. The various electronic circuitry has been miniaturized and can be rapidly and inexpensively printed on circuit boards. Automatic assembly line production processes can quickly and accurately build the various components that enable performance of the desired functions of the work station. The final stage is the assembling of the components and circuit boards into a completed unit making up the work station.

This final assembly process is typically accomplished in a manual operation. For example, a custom designed chassis is provided with the appropriate compartments wherein the subassemblies are to be mounted. The various subassemblies (e.g. which can be from 6 to 60 in number) are then one by one positioned in the designated compartments, manually fastened as by screws screwed into screw holes provided in the subassembly and chassis, and then electronically interconnected as by pluging in the appropriate conductors.

The entire process of assembly has typically required dozens and even hundreds of screws to be fastened into a single work station. Individual handling of each screw type fastener is a time consuming operation and the labor cost is a very major factor in the overall cost of the unit. It is to the reduction of this cost factor that the present invention is directed.

## Summary of the Invention

The present invention focuses on the consumption of time generated by the required handling of fasteners, particularly screw type fasteners. Such fasteners generally require a seperate fastening component e.g. a screw, a tool for mounting the fastener, e.g. a screw driver, and the effort to achieve fastening e.g. the time to rotate the screw the dozen or so turns that it takes to drive the screw.

In the preferred embodiment of the invention, slidably interlocking male and female mounting components are formed on the chassis and subassemblies. These components do not require separate handling, no tool is required, and the time involved is merely the time it takes for the placement of the subassembly into the designated position in the chassis and sliding it home. Preferably, the chassis is provided with the male and/or female mounting components by molding the components into the chassis frame at the precise positions designated by the assembly designer. The subassemblies are preferrably mounted in trays which are designed to fit the configuration of the electronic unit and to fit the positions designated for them in the chassis. The trays are provided (as by molding) with the counterparts of the chassis mounting components.

The mounting components are of the type wherein a male component e.g. a pin molded on the tray, is adapted to slide into the female component e.g. a slot or hole molded in the chassis. The mounting components are coupled with a lock feature that is automatically activated when the pin is appropriately positioned in the slot. Thus, the assembly process simply involves positioning the pins of the trays to engage the slots of the chassis and forcing the pins home until the automatic lock is engaged. This is accomplished in a matter of seconds compared to minutes with the screw type fastener. Over a period of time, many hours of labor are saved resulting in a vast savings in dollars.

### Brief Description of the Drawings

The invention will be more fully appreciated by reference to the following detailed description having reference to the accompanying drawings wherein;

Fig. 1 is an exploded perspective view of a desk top computer illustrating the various subassemblies that are required to be assembled together;

Fig. 2 is a top view of the unit of Fig. 1 with the top cover removed so as to illustrate certain ones of the interconnected subassemblies;

Fig. 3 is a cross sectional view as taken on view lines 3-3 of Fig. 2;

Fig. 4 is a cross sectional view as taken on view lines 4-4 of Fig. 2;

Fig. 5 is a cross sectional view as taken on views 5-5 of Fig. 2;

Fig. 6 is a side view as taken on lines 6-6 of Fig. 2;

Fig. 7 is a cross sectional view as taken on section lines 7-7 of Fig. 6;

Fig. 8 is a cross sectional view as taken on view lines 8-8 of Fig. 6; and

Fig. 9 is a cross sectional view as taken on view lines 9-9 of Fig. 2.

Description of the Preferred Embodiment

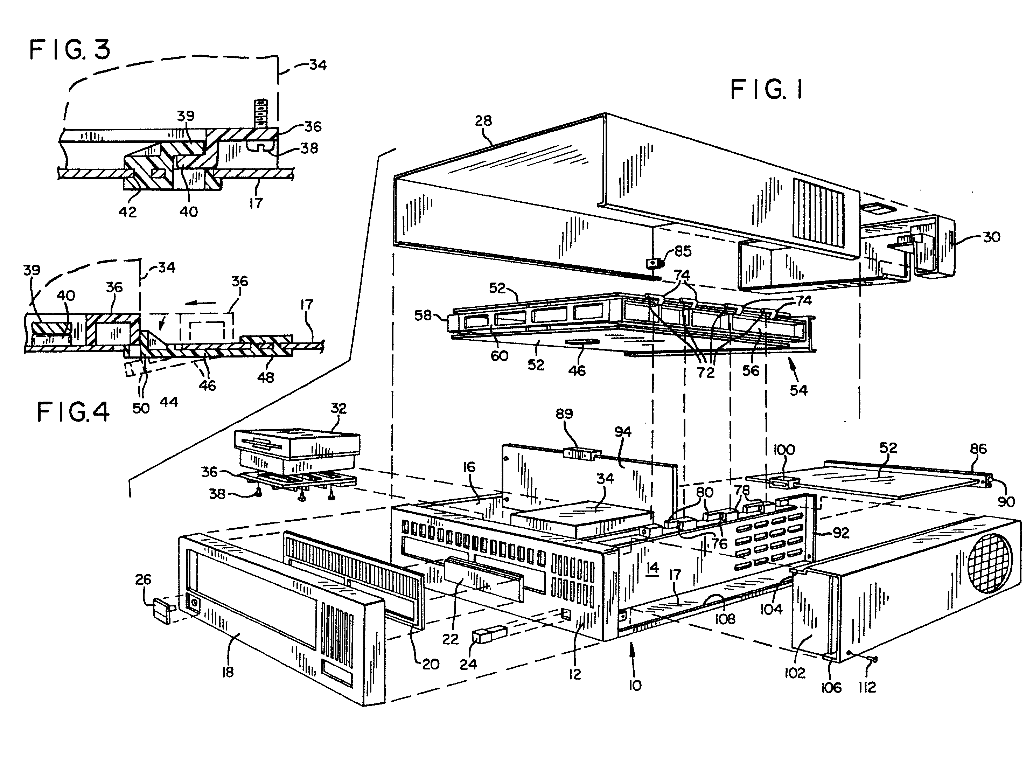

Referring to the exploded view of Fig. 1, the unit illustrated includes a chassis 10 having a front wall 12, a first side wall 14, a second side wall 16, and a bottom 17 (not shown in Fig. 1). Front wall panels 18, 20, 22, button 24 and removable decal 26 are all attached to the front wall by various clips and snap fasteners. The assembly of these parts to the work station is in accordance with conventional practice. Similarly, the top cover 28 and back cover 30 are typical for such assemblies and more specific disclosure of these parts and their assembly is deleted.

Reference will now be made to the assembly of disk units 32 and 34, representing a floppy disk subassembly and a hard disk subassembly respectively. As seen in Fig. 1, the disk units 32 and 34 are mounted on carrier trays 36 (as by screws 38).

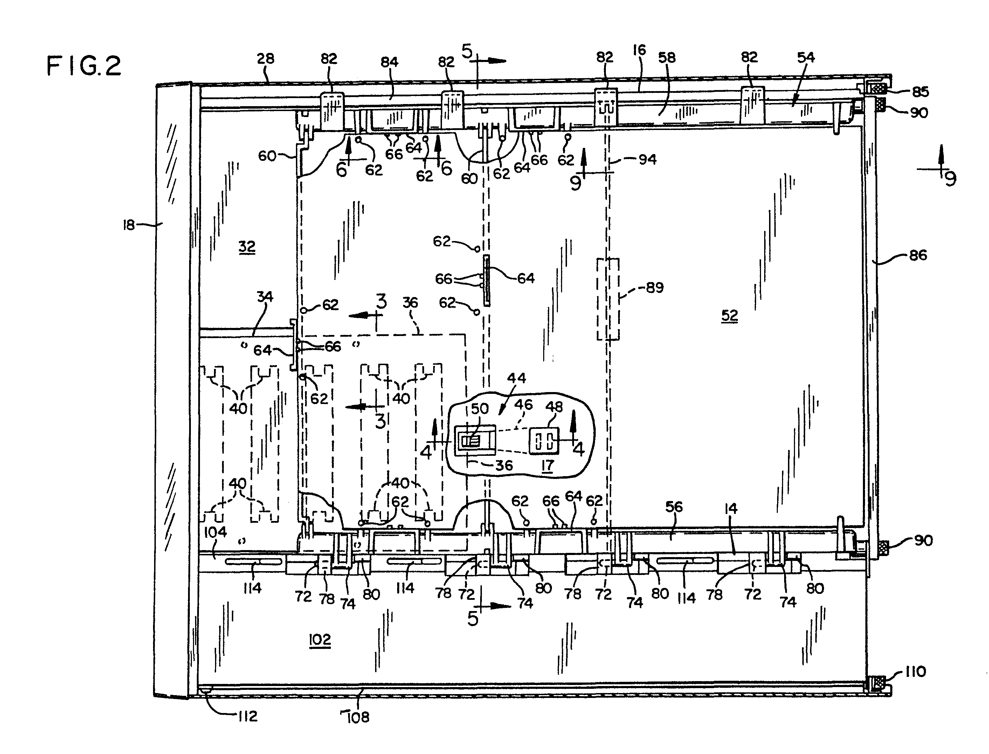

The interlocking mounting components for the disk units is illustrated in Figs. 2 thru 4. The carrier tray 36 is provided with ears 40 (the male mounting component) that are adapted to mate with finger like projections 39 that form, with the bottom wall 17, the female mounting component. The projections 39 are molded into the wall 17. The metal wall 17 is provided with gripping slots 42 and the projections are simply molded into the wall in a molding process i.e. molding forms are placed around the wall slots and molten plastic is poured into the forms and allowed to harden (sometimes referred to hereafter as spot molding).

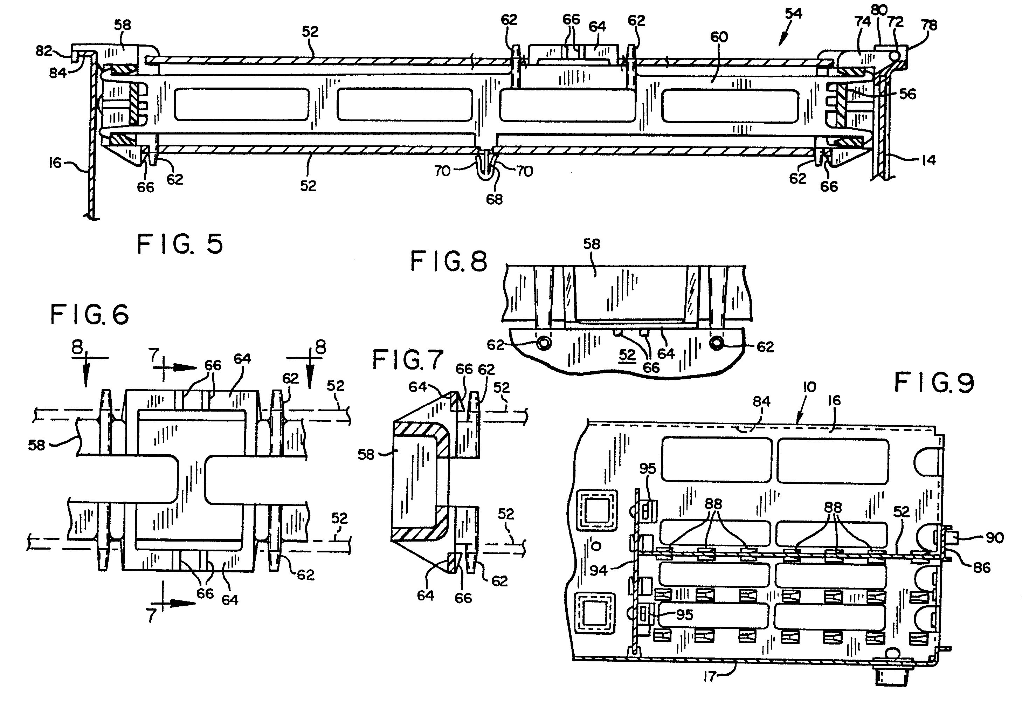

Assembly of subassembly 34 (or 32) to the chassis is simply a matter of positioning the subassembly on the wall 17, with the ears 40 of the subassembly interleaved between the projections 39 but in line with the spacing provided under the projections. The unit is then slid forward until the ears 40 are slid under the projections 39 as illustrated in Fig. 3. The subassembly unit 34 is locked in place by locking member 44 (see Figs. 2 and 4). The member 44 is molded into the wall 17 in a similar fashion to that of the projections 39, and include a spring biased arm 46 anchored at one end 48 with a stop tab 50 at its opposite end.

The initial placement of the unit 34 into alignment with projections 39, places the unit 34 on the member 44 and bends the member downward as illustrated in the dash lines of Fig. 4 (the end of the carrier tray 36 in its initial position is also shown in dash lines). When the carrier tray carrying unit 34 is slid home as seen in solid lines, the stop tab 50 springs back into place behind the carrier tray 36. The unit and carrier tray can not now be removed without first manually depressing the stop tab to permit reverse sliding of the carrier tray.

The assembly of circuit boards to the chassis will now be explained. There are a number of circuit boards 52 that are utilized in the illustrated work station. They are of different sizes and are generally mounted into the chassis with either of two different fastening concepts. The first is provided by a slide - pivotal fastener tray 54 and the several parts are illustrated in Figs. 1, 2 and 5 thru 8. The tray 54 is comprised of side members 56, 58 interconnected by cross braces 60. The cross braces 60 and side members 56, 58 are provided with positioning pins 62 and securing bars 64. The positioning pins are slightly conical as particularly seen in Figs. 5, 6 and 7. They are located and designed to mate with positioning holes in the circuit boards 52. The securing bars 64 are braced at each end and provided with central ribs 66 projecting outward from the bars.

Note that the ribs 66 are slightly wedge shaped (Fig. 7) to provide a ramp like effect. The bars are resilient, and positioning of the circuit boards past the ribs causes flexing of the bars 64 (the central portion carrying the ribs) until the circuit board is forced down on pins 62 past the lower edge of the ribs 66. At this point the bars snap back into place with ribs 66 projected over the circuit board edge to lock the circuit boards onto the tray. This same fastener concept is used to fasten circuit boards to the bottom of the tray as seen in Figs. 5, 6 and 7.

Also illustrated in Fig. 5 is another form of the fastening concept whereby a post 68 and flexible ribs 70 are provided on the same element but otherwise function in a similar manner i.e. the hole in the circuit board is forced over the ribs 70 with the ribs first collapsing to permit seating of the board and then expanding outwardly as shown in Fig. 5 to prevent removal of the board.

The tray 54 is fastened to the chassis as follows: Pivot pins 72 are projected forwardly from lugs 74 formed on the upper edge of the side wall 56 of the tray 54. Pin mating openings 76 are provided in lugs 78 formed on the chassis wall 14 (as by the spot molding process previously described). Locking embossments 80, molded as part of lugs 78, project forwardly on the lugs 78 leaving a limited spacing between the lugs. Whereas tray 54 is shown in a horizontal position in Fig. 1, in order for the pins 72 to be inserted in openings 76, the tray must first be oriented to a vertical position whereby the lugs 74 of the tray can be positioned along side the embossments 80, and slid forward to insert pin 72 in openings 76. The lugs 74 are then out of interferring alignment with the embossments i.e. they are positioned in the spacing between the lugs, and the tray can then be pivoted back to its horizontal position. The pins can not be withdrawn without pivoting the tray back to its vertical position.

Positioned on side member 58 of the tray are snap fitting flange elements 82 (formed of the resilient plastic). With the tray pivoted over the chassis i.e. in the closed position illustrated in Fig. 5, these flange elements 82 snap fit over the flange 84 formed on the side wall 16 of the chassis. It is desirable to secure certain parts of the assembly with screws, and this pivotal tray 54 is such a part. Thus it is further secured to the chassis by screws 85 screwed into flanges formed on the rear end edges of side wall 16 (see Fig. 2).

The second type of tray for the circuit boards is adapted to slide into the chassis, under the tray 54, and primarily utilizes the stiffness of the boards for support. These circuit boards are provided with a back plate 86 (Figs. 1 and 9). Guide clips 88 (again spot molded into the chassis walls) guide the boards into the chassis and then support the boards in the home position as particularly viewed in Fig. 9. Back plate 86 is provided with locking screws 90 that screw into side flanges 92 of the side walls 14 and 16 of the chassis. This secures the back plate to the chassis and provides a rigid bracing across the rear end of the chassis.

The electrical connections are primarily achieved in the same motion whereby the various trays are locked into the home position. Note that a bracing wall 94 is inserted between the chassis walls (slid into and supported by channels formed in the walls). This bracing wall 94 provides the central connection for certain of the subassemblies. Because of its stabilizing effect, this wall may be screwed into the side walls 14 and 16 e.g. into screw receiving nutes 95 that are secured to the walls 14 and 16, e.g. encased in plastic holders molded to the walls as by the spot molding process. Note that tray 52, when pivoted into place, produces connection of receptacles 96 of the tray with receptacle 98 of the bracing wall 94. Further, it will be understood that receptacle 100 on the circuit board, attached to back plate 86, connects to a mating recepticle on bracing wall 94 (not shown). The floppy disk and hard disk units 32 and 34 may be similarly connected but in the present embodiment are provided with cable connections (not shown).

The power unit 102 is also provided as a seperate subassembly that is positioned in the compartment formed along side chassis wall 14. The lower end of the unit is placed in the channel 108 in side wall 14, and the top of the power unit is then pivoted to engage the upper edge of side wall 14 (thereby producing interengagement of the slot and tab fittings 114 illustrated in Fig. 2). The unit is slid forward inside front cover 12 and secured with screws, e.g. at the back (screw 110) and on the front side (screw 112). This securing of the power unit subassembly to the chassis greatly adds to the mechanical strength and stability of the completed assembly.

The assembly process first assumes the provision of the chassis walls with the various clips and lugs, spot molded into place, and it assumes the provision of the subassemblies, including disk units 32 and 34 being mounted in carrier trays 36. It also assumes the circuit board holding trays 54 and 86 with circuit boards mounted therein.

The first step is to install the bracing wall 94 by sliding it into its channels on the side walls 14 and 16, and securing it by the screw and nut fasteners. The disk units in their carrier trays, are then positioned with ears 40 interleaved with projections 39 on the chassis, and with stop tab 50 depressed. The carrier trays are pushed home to force the ears 40 under the projections 39 at which point stop tab 50 snaps up behind the carrier trays to lock the trays into position.

The pivotal tray loaded with the designated circuit boards, is vertically oriented whereby the pins 72 are aligned with holes 76 in the chassis wall lugs 78. The tray is slid forward and pivoted down over the disk units, onto the bracing wall to be electrically connected into receptacles 98, and with end clamps 82 of the tray snap locking onto side wall 16 of the chassis.

Carrier trays comprised of the circuit boards mounted on the backing plates 86, are next located in the guide clips 88 on the chassis walls and driven home i.e. against bracing wall 94 to which receptacle 100 is attached. The

bottom of the power unit 102 is then positioned in channel 108 of the chassis wall 14, electrical cables are passed through the wall (through an opening not shown) to be connected to the subassemblies, it is then pivoted to interengage flange 104 with the upper edge of wall 14, slid forward inside cover 12, and locked into place, preferably with locking screws as indicated at 110 and 112. Finally, the covers including front covers 18, 20, and 22, top cover 28, and back cover 30 are locked into place.

Whereas assembly time can be varied, particularly dependent on the degree to which the subassemblies are completed, it has been found that assembly time can be reduced by as much as 75% using the novel concept of assembly described above. It is to be understood that this process has beneficial application to any number of applications wherein electronic subassemblies are to be connected into a unit of equipment, generally referred to herein as a work station. Whereas the steps of the assembly, the specific slide locking designs, and other aspects thereof may be modified without departing from this inventive concept, such variations and modifications are encompassed by the invention as will be determined by reference to the claims appended hereto.

Claims

1. An assembly for an electronic work station consisting of a multiple of interconnected electronic subassemblies comprising; a chassis including side walls and cross braces, compartments within the chassis designated for specific preassembled subassemblies, and said subassemblies mounted in said compartments, and the improvement which comprises; mounting means for mounting the subassemblies into the chassis including male mounting components and female mounting components adapted for sliding interengagement, one of said male and female mounting components formed into the chassis walls and cross braces at designated locations within the designated compartments, and said subassemblies including carrier trays, each containing an electronic unit, and the other of said male and female interengaging mounting means being formed into the carrier tray at designated locations for mating with its counter part on the chassis, and locking means for locking the mounting means against sliding disengagement upon positioning the subassemblies into its home position in the chassis.

2. An assembly for an electronic work station as defined in claim 1 wherein certain ones of said mounting means include projections on the chassis wall forming with the wall, female mounting components, and ear portions protruded from the carrier tray adapted to interlock with the projections of the subassembly when located in its home position.

3. An assembly for an electronic work station as defined in claim 2 wherein a spring biased member, including a stop tab is located in the chassis wall immediately behind the home position of the carrier tray, said stop tab being spring biased into the return path of the carrier tray to prevent sliding disengagement of the mounting components.

4.     An assembly for an electronic work station as defined in claim 1 wherein certain ones of said mounting means includes lugs on the top edges of one of the chassis walls with pin receiving openings therein providing the female mounting components, and a pivotal carrier tray having pins formed along one edge adapted to slidingly engage said lug openings of the chassis wall whereby the carrier can be pivoted onto and away from the enclosure defined by the chassis walls.

5.     An assembly for an electronic work station as defined in claim 4 wherein embossments are formed on the chassis walls in limited spaced relation to the lugs, said embossments positioned to require the opened position of the pivotal tray for sliding interengagement of the pin with the lug openings, and said embossments prohibiting sliding disengagement of the pins with the pivotal tray folded onto the chassis walls.

6.     An assembly for an electronic work station as defined in claim 5 wherein said pivotal tray contains circuit boards, fastening means fastening the circuit boards to the tray including conical positioning pins on the tray, pin receiving openings in the circuit boards and resilient bars having ribs that are spring biased over the circuit boards to secure the circuit boards onto the positioning pins.

7.     A system for assembling an electronic work station having electronic subassemblies which includes; providing male and female slidable engaging mounting means, providing a chassis having designated compartments and one of said male and female mounting means formed into the chassis at designated locations within each compartment, providing subassemblies compromised of an electronic unit mounted onto a carrier tray, and said tray having one of said male and female mounting means formed into the tray at designated locations to be mated with its counter part component in the chassis, positioning said subassembly with the male and female mounting components aligned for sliding engagement, sliding the subassemblies into the home position in the designated compartments in a sequential operation for assembling of the work station.

8.    A system for assembling an electronic work station as defined in claim 7 that includes providing locking means that automatically locks the subassemblies to the chassis when driven into the home position.

9.    A system for assembling a computer based work station including disk drive subassemblies and circuit board subassemblies which comprises; providing a chassis including side walls and bottom cross braces with compartments designated for housing the disk drive and circuit board subassemblies, said disk drive subassemblies including a carrier tray carrying the disk drive unit, ear projections on the tray forming male mounting components adapted to be interengaged with projections forming female mounting components provided on the cross braces of the chassis, said circuit board subassemblies including a carrier tray carrying the circuit boards and including pivot pin projections forming male mounting components adapted to be interengaged with pivot pin openings provided in lugs provided on the upper edge of the chassis wall, said disk drive subassemblies and circuit board subassemblies being positioned for sliding engagement of the mounting means and driven into the home position in their designated compartments.

10. A system for assembling a computer based work station as defined in claim 9 wherein automatic locking means are provided to automatically lock the subassemblies into their home position, said locking means including a spring biased stop tab positioned immediately behind the home position for the disk drive subassemblies to be biased into the path of sliding disengagement with the subassemblies in their home position.

11. A system for assembling a computer based work station as defined in claim 10 including embossments on the chassis wall edge in limited spaced relation to the lugs whereby sliding engagement of the carrier for the circuit boards is permitted only with the carrier tray in its open position and whereby locking is thereby acheived with the carrier tray in its closed position.

12. A system for assembling a computer based work station as defined in claim 11 wherein certain ones of the female, male mounting components are formed in the chassis by a molding process whereby plastic molded projections of specific design are directly molded onto the chassis walls.

FIG.1

FIG.3

FIG.4

FIG.2

FIG. 5

FIG. 6

FIG. 8

FIG.7

FIG. 9